**Europäisches Patentamt**

**European Patent Office**

**Office européen des brevets**

(19)

(11) Veröffentlichungsnummer : **0 324 465 B1**

(12) # EUROPÄISCHE PATENTSCHRIFT

(45) Veröffentlichungstag der Patentschrift :
**25.03.92 Patentblatt 92/13**

(51) Int. Cl.⁵ : **A62D 3/00, B09B 5/00**

(21) Anmeldenummer : **89100459.0**

(22) Anmeldetag : **12.01.89**

(54) **Verfahren zur Entgiftung eines durch Chromat belasteten Bodens.**

(30) Priorität : **15.01.88 DE 3800985**

(43) Veröffentlichungstag der Anmeldung :
**19.07.89 Patentblatt 89/29**

(45) Bekanntmachung des Hinweises auf die
Patenterteilung :
**25.03.92 Patentblatt 92/13**

(84) Benannte Vertragsstaaten :
**AT BE CH DE ES FR GB GR IT LI NL SE**

(56) Entgegenhaltungen :
**FR-A- 1 272 868
GB-A- 2 098 644
US-A- 2 912 793
US-A- 3 858 655
US-A- 3 981 965**

(73) Patentinhaber : **Dr. Wolman GmbH
Dr.-Wolman-Strasse 31-33
W-7573 Sinzheim (DE)**

(72) Erfinder : **Marx, Hans-Norbert
Tuerkenlouisstrasse 5
W-7580 Buehl-Vimbuch (DE)**

(74) Vertreter : **Karau, Wolfgang, Dr. et al
BASF Aktiengesellschaft Carl-Bosch-Strasse 38
W-6700 Ludwigshafen (DE)**

EP 0 324 465 B1

## Beschreibung

Die vorliegende Erfindung betrifft ein Verfahren zur Entgiftung eines durch Chromat belasteten Bodens durch Behandlung mit einem gasförmigen Reduktionsmittel.

Es ist bekannt, daß Böden durch Eindringen von Chromat enthaltenden wäßrigen Lösungen vergiftet werden, wobei die Gefahr besteht, daß das Chromat durch Auswaschung aus dem Boden in das Grundwasser gelangt. Es besteht daher die Aufgabe, einen Boden, der durch Chromat vergiftet ist, zu entgiften und jede Gefahr für das Grundwasser zu beseitigen.

Es ist bekannt, durch Chromat vergiftete Böden mit wäßrigen Lösungen von Reduktionsmitteln zu behandeln. Unter anderem werden Lösungen von Eisen-[II]-sulfat, Alkalisulfiten und gegebenenfalls organischen Reduktionsmitteln eingesetzt. Je nach Typ des Reduktionsmittels ist es von Vorteil, den pH-Wert des Bodens in den für die Reduktion optimalen Bereich zu bringen, z.B. durch Zugabe von Säure zu den Eisensulfatlösungen (FR-A-1 272 868, US-A-3 981 965).

Die auf den entsprechenden pH-Wert eingestellten Lösungen werden oberflächlich auf den Böden aufgebracht oder mittels Lanzen in den Boden injiziert.

Diese Methode hat jedoch spezifische Nachteile. So dringt die Reduktionslösung nur langsam in den Boden ein und verteilt sich nur langsam um den Einstichort der Lanzen. Es ist daher kaum möglich, die Lösung des Reduktionsmittels gleichmäßig im Boden zu verteilen. Die langsame Verteilung der wäßrigen Reduktionsmittel bedingt zusätzlich, daß ein Teil des Reduktionsmittels durch Oxidation im Boden (Bodenluft) inaktiviert wird.

Es wurde nun gefunden, daß man diese Nachteile vermeidet, wenn man den Boden mit einem gasförmigen Reduktionsmittel behandelt. Das Gas verteilt sich schneller und besser im Boden als eine wäßrige Lösung. Die zu reduzierenden Chromate werden von dem Gas schneller, sicherer und mit weniger Aufwand erreicht, da sich das Reduktionsmedium nicht nur vertikal, sondern auch horizontal im Boden ausbreitet. Dadurch gelingt es, das Reduktionsmittel gleichmäßig im Boden zu verteilen.

Unter Chromat ist allgemein eine Verbindung des sechswertigen Chroms also Chromat und Bichromat, beispielsweise Kaliumchromat, Natriumchromat, Kaliumbichromat, Natriumbichromat zu verstehen. Ein gasförmiges Reduktionsmikttel ist beispielsweise Schwefeldioxid, Formaldehyd, Kohlenmonoxid oder eine eines dieser Gase enthaltende Mischung. Es ist vorteilhaft, die gasförmigen Reduktionsmittel bei ihrer Anwendung durch ein anderes nicht reduzierendes Gas zu verdünnen, z.B. durch Kohlendioxid, Stickstoff, Luft, Wasserdampf oder eine eines dieser Gase enthaltende Mischung. Hierdurch kann man die Konzentration des reduzierenden Gases der Chromatbelastung und den verschiedenen Bodentypen anpassen.

Durch Zumischung von Wasserdampf zu dem reduzierenden Gas gelingt es, die Reduktion des Chromats an Standorten mit besonders geringer Bodenfeuchtigkeit zu verbessern.

Ein weiterer Vorteil des erfindungsgemäßen Verfahrens besteht darin, daß man die Entgiftung auch unter befestigten, z.B. betonierten oder asphaltierten Flächen, Hallen und anderen Einrichtungen durchführen kann, die von der Oberfläche her mit wäßrigen Lösungen von Reduktionsmitteln nicht erreicht werden können.

Beispiele für reduzierende Gasgemische sind: Prozentangaben in Volumenprozent.

2

| | | |
|---|---|---|
| 1. | 5,00% | Schwefeldioxid |
| | 95,00% | Kohlendioxid |
| 2. | 20,00% | Schwefeldioxid |
| | 80,00% | Luft |
| 3. | 10,00% | Schwefeldioxid |
| | 10,00% | Wasserdampf |
| | 80,00% | Luft |
| 4. | 5,00% | Formaldehyd (gasförmig) |
| | 95,00% | Stickstoff |
| 5. | 5,00% | Kohlenmonoxid |
| | 5,00% | Schwefeldioxid |
| | 90,00% | Luft, feuchtigkeitsgesättigt |

Das Gasgemisch kann z.B. mittels Lanzen in den Boden gepreßt werden. Das Gasgemisch kann nach Art des verwendeten Reduktionsmittels (siehe Beispiele) und Menge (Volumen) der Konzentration des Chromats im Boden angepaßt werden.

Das durch die Reduktion aus dem sechswertigen Chrom (Chromat) entstehende dreiwertige Chrom, z.B. Chrom-(III)-sulfat wird im Boden hydrolysiert und als unlösliches Chrom(III)-hydroxid in die Bodensubstanz eingebaut und festgelegt. Durch das erfindungsgemäße Verfahren wird der Chromat enthaltende Boden entgiftet und das Chrom in Form unlöslicher Verbindungen im Boden festgelegt. Hierdurch wird eine Grundwassergefährdung vermieden.

## Patentansprüche

1. Verfahren zur Entgiftung eines durch Chromat belasteten Bodens mit einem Reduktionsmittel, dadurch gekennzeichnet, daß man den Boden mit einem gasförmigen Reduktionsmittel behandelt.

2. Verfahren nach Anspruch 1, dadurch gekennzeichnet, daß man als gasförmiges Reduktionsmittel Schwefeldioxid verwendet.

3. Verfahren nach Anspruch 1, dadurch gekennzeichnet, daß man als gasförmiges Reduktionsmittel eine Mischung von Schwefeldioxid mit einem nichtreduzierenden Gas verwendet.

4. Verfahren nach Anspruch 1, dadurch gekennzeichnet, daß man Kohlenmonoxid, Formaldehyd oder ihre Mischung mit Schwefeldioxid als gasförmiges Reduktionsmittel verwendet.

5. Verfahren nach Anspruch 3, dadurch gekennzeichnet, daß man als nichtreduzierendes Gas Kohlendioxid, Stickstoff, Luft, Wasserdampf oder ihre Mischung verwendet.

## Claims

1. A process for the decontamination of soil contaminated with chromate by means of a reducing agent, wherein the soil is treated with a gaseous reducing agent.

2. A process as claimed in claim 1, wherein the gaseous reducing agent used is sulfur dioxide.

3. A process as claimed in claim 1, wherein the gaseous reducing agent used is a mixture of sulfur dioxide with a nonreducing gas.

4. A process as claimed in claim 1, wherein the gaseous reducing agent used is carbon monoxide, formaldehyde or a mixture thereof with sulfur dioxide.

5. A process as claimed in claim 3, wherein the nonreducing gas used is carbon dioxide, nitrogen, air, steam or a mixture thereof.

**Revendications**

1. Procédé de décontamination d'un sol chargé de chromate au moyen d'un agent réducteur, caractérisé par le fait que l'on traite le sol par un agent réducteur gazeux.

2. Procédé selon la revendication 1, caractérisé par le fait que l'on utilise, comme agent réducteur gazeux, de l'anhydride sulfureux.

3. Procédé selon la revendication 1, caractérisé par le fait que l'on utilise, comme agent réducteur gazeux, un mélange d'anhydride sulfureux et d'un gaz non réducteur.

4. Procédé selon la revendication 1, caractérisé par le fait que l'on utilise, comme agent réducteur gazeux, de l'oxyde de carbone, du formaldéhyde ou leur mélange avec de l'anhydride sulfureux.

5. Procédé selon la revendication 3, caractérisé par le fait que l'on utilise, comme gaz non réducteur, de l'anhydride carbonique, de l'azote, de l'air, de la vapeur d'eau ou un mélange de ces gaz.